# EUROPEAN PATENT APPLICATION

(11) **EP 4 753 330 A1**
(43) Date of publication of application: **03.06.2026**
(21) Application number: 24845437.3
(22) Date of filing: 12.07.2024
(51) Int. Cl.: H04W 36/08, H04W 4/40, H04W 36/30, H04W 40/36, H04W 88/04

(54) **BASE STATION, COMMUNICATION DEVICE, CONTROL METHOD, AND PROGRAM**

(30) Priority: 24.07.2023 JP 2023119999
(71) Applicant: Canon Kabushiki Kaisha, Tokyo 146-8501 (JP)
(72) Inventor: NISHIYAMA Kosuke, Tokyo 146-8501 (JP)
(74) Representative: Canon Europe Limited
(86) International application number: PCT/JP2024/025192
(87) International publication number: WO 2025/023056

(57) **Abstract**

A base station is disclosed which includes a control unit configured to perform a handover of a relay User Equipment (relay UE) including a Sidelink relay function to another base station in a situation where a Sidelink connection is established with a remote User Equipment (remote UE) via the relay UE, wherein in a case where the control unit determines to perform the handover of the relay UE to the other base station in a state where the remote UE is relayed via the relay UE, the control unit performs predetermined control related to communication on the remote UE prior to the handover of the relay UE.

## Description

### Technical Field

The present disclosure relates to a base station, a communication apparatus, a control method, and a program.

### Background Art

In recent years, the 3rd Generation Partnership Project (3GPP^{®}) is developing the Long Term Evolution (LTE) specifications and the next generation (New Radio: NR) specifications. Among them, a standard specification known as Sidelink communication (hereinafter, "Sidelink") is being developed. This specification realizes direct wireless communication between apparatuses using an interface known as PC 5 without using a mobile communication network (core network).

Furthermore, 3GPP is also developing a specification to extend the communication range of Sidelink using a Sidelink relay function that relays Sidelink communication via a relay apparatus (relay User Equipment (relay UE)). In this specification, a method is defined in which a communication state of a communication terminal (remote User Equipment (remote UE)) including a function to connect to a base station (next-generation Node B (gNB)) through a Sidelink function relay is switched from an indirect path to a direct path without disconnecting a service. Further, a method for switching from the direct path to the indirect path without disconnecting the service is also defined. It should be noted that the indirect path refers to the communication state of the remote UE connected to the gNB via the relay UE, and the direct path refers to the communication state of the remote UE connected directly to the gNB.

Patent Document 1 describes a method for switching the remote UE from the indirect path to the direct path without disconnecting the service. Further, a method for handover from the indirect path to another gNB (Target gNB) is also described.

### Citation List

### Patent Literature

PTL 1: United States Patent Application Publication No. 2022-0377822

### Summary of Invention

### Technical Problem

In a case where a relay UE receives a handover instruction from a gNB, the relay UE operates as follows. The relay UE sets a "relayUE-HO" in an IndicationType of a "NotificationMessageSidelink", which is a PC5 Radio Resource Control (RRC) message, to a served remote UE. Then, the relay UE transmits the resulting "NotificationMessageSidelink" to the remote UE.

In this case, the remote UE having received the NotificationMessageSidelink transitions to RRC_IDLE. Thereafter, the remote UE remains in a state where the remote UE cannot communicate with a network until the remote UE releases the PC5 link and completes cell or relay reselection.

The present disclosure has been made in view of at least one of the above-described issues. According to an aspect of the present disclosure, the present disclosure is directed to providing a mechanism for mitigating potential inconveniences that may arise for a remote UE during handover to a relay UE.

### Solution to Problem

According to an aspect of the present disclosure, a base station includes a control unit configured to perform a handover of a relay User Equipment (relay UE) including a Sidelink relay function to another base station in a situation where a Sidelink connection is established with a remote User Equipment (remote UE) via the relay UE, wherein in a case where the control unit determines to perform the handover of the relay UE to the other base station in a state where the remote UE is relayed via the relay UE, the control unit performs predetermined control related to communication on the remote UE prior to the handover of the relay UE.

### Advantageous Effects of Invention

According to an aspect of the present disclosure, the present disclosure makes it possible to provide a mechanism for mitigating potential inconveniences that may arise for a remote UE during handover to a relay UE.

### Brief Description of Drawings

[Fig. 1] Fig. 1 is a diagram illustrating a configuration of a communication apparatus according to the present embodiment.
[Fig. 2] Fig. 2 is a block diagram illustrating an example of a functional configuration of a base station (next-generation Node B (gNB)) according to the present embodiment.
[Fig. 3A] Fig. 3A is a block diagram illustrating an example of a functional configuration of a remote User Equipment (remote UE) according to the present embodiment.
[Fig. 3B] Fig. 3B is a block diagram illustrating an example of a functional configuration of a remote UE according to the present embodiment.
[Fig. 4] Fig. 4 is a sequence diagram illustrating a case where the gNB makes a handover decision for a relay UE and makes a path switch decision for the remote UE according to a first embodiment.
[Fig. 5] Fig. 5 is a flowchart for a gNB A according to the first embodiment.
[Fig. 6] Fig. 6 is a sequence diagram illustrating a case where the gNB makes a handover decision for the relay UE and makes a path switch decision for the remote UE according to a second embodiment.
[Fig. 7] Fig. 7 is a flowchart for the gNB A according to the second embodiment.
[Fig. 8] Fig. 8 is a flowchart for a UE B according to the second embodiment.
[Fig. 9] Fig. 9 illustrates a SidelinkUEInformationNR message format according to the second embodiment.
[Fig. 10] Fig. 10 is a sequence diagram illustrating a case where the gNB makes a handover decision for the relay UE and makes a path switch decision for the remote UE according to a modified example.
[Fig. 11] Fig. 11 is a flowchart for the gNB A according to the present modified example.
[Fig. 12] Fig. 12 is a sequence diagram related to path switching to an indirect path.

### Description of Embodiments

Each embodiment will be described in detail with reference to the attached drawings.

### [System Configuration]

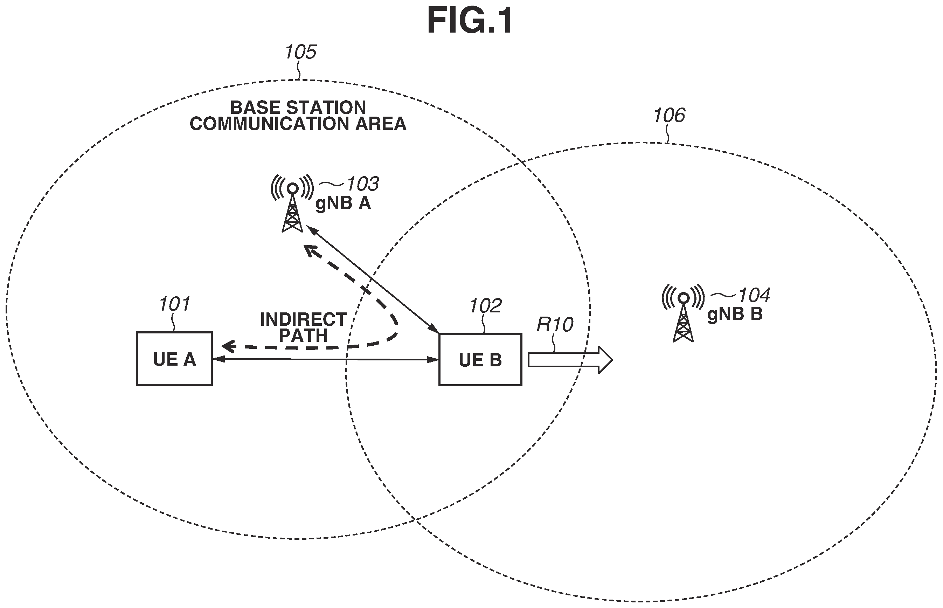

Fig. 1 is a diagram illustrating an example of a configuration of a system according to the present embodiment. In Fig. 1, a User Equipment (UE) A (101) and a UE B (102) are within a communication area (105) of a next-generation Node B (gNB) A (103).

The UE A (101) operates as a remote UE configured to communicate with the gNB A (103) using Sidelinkrelay communication. The UE B (102) operates as a relay UE configured relay communication between the UEA (101) and the gNB A (103) using a Sidelinkrelay function. In other words, the UE A is transmitting and receiving data to and from the gNB A over an indirect path through the UE B.

Further, the UE B (102) is also within a communication area (106) of a gNB B (104). In this case, the following situation may occur. The UE B (102) is moving out of the communication area (105) of the gNB A (103) and approaching the communication area (106) of the gNB B (104) (refer to an arrow R10). Thus, the gNB A (103) is attempting to hand over the UE B (102) to the gNB B (104), which serves as a target.

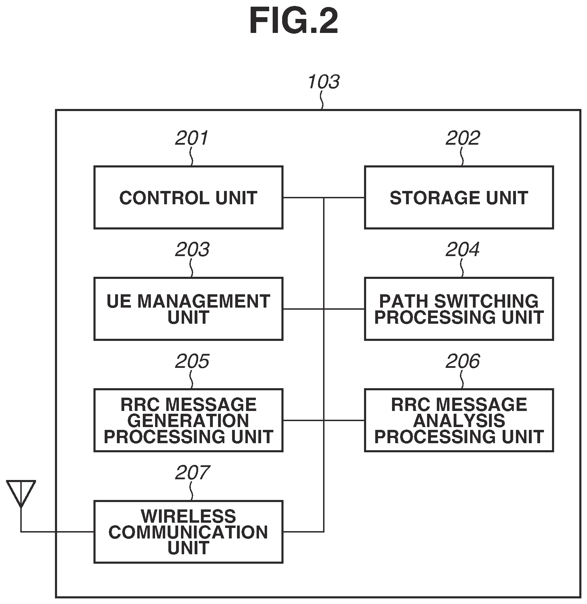

Fig. 2 is a block diagram illustrating an example of a functional configuration of the gNB A (103) according to the present embodiment. It should be noted that the gNB B (104) may have a functional configuration similar to the following functional configuration of the gNB A (103).

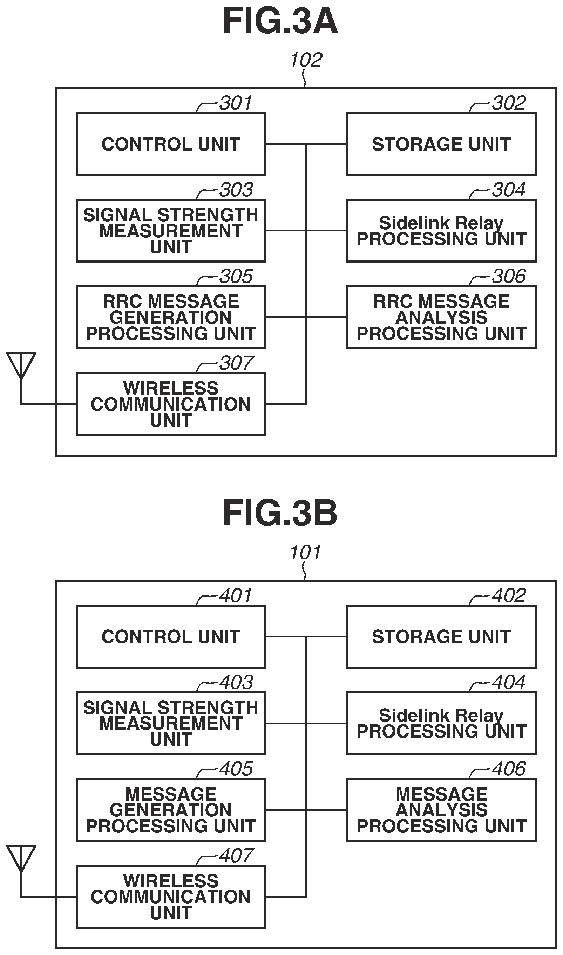

It should be noted that a functional block described below with reference to Fig. 2, 3A, or 3B may be partially or fully replaced with another functional block configured to provide a similar function. It should also be noted that some functional blocks may be omitted, or another functional block may be added. Further, a single functional block described below may be divided into a plurality of functional blocks, or a plurality of functional blocks may be integrated into a single functional block.

In the example illustrated in Fig. 2, the gNB A (103) includes a control unit 201, a storage unit 202, a UE management unit 203, a path switching decision processing unit 204, an RRC message generation processing unit 205, an RRC message analysis processing unit 206, and a wireless communication unit 207.

The control unit 201 controls the operation of the gNB A (103) (own station). The control unit 201 consists of, for example, one or more processors, such as a central processing unit (CPU) or microprocessor unit (MPU), and controls the entire communication apparatus by executing a control program loaded into a random access memory that is the storage unit 202. It should be noted that each process performed by the control unit 201 in a flowchart described below may also be realized using a hardware circuit, such as an application specific integrated circuit (ASIC) or field programmable gate array (FPGA). ASIC is short for Application Specific Integrated Circuit. FPGA is short for Field Programmable Gate Array.

Further, a hardware circuit and a processor, such as a CPU or MPU, may cooperate to realize a process illustrated in a flowchart described below.

The storage unit 202 stores information used by the control unit 201 to perform control and information related to communication. The storage unit 202 may include a main storage unit and a secondary storage unit. The main storage unit is, for example, a read only memory (ROM) or random access memory (RAM). The main storage unit may store or temporarily hold a program and data, such as an operating system (OS) that is basic software executed by the control unit 201 or application software. The secondary storage unit is, for example, a hard disk drive (HDD) or solid state drive (SSD) and may store data related to application software or other programs. For example, a control program stored in a non-volatile storage area is loaded into the random access memory (RAM) and executed by the processor of the control unit 201. The control unit 201 and the storage unit 202 may function as a so-called computer as described above.

The storage unit 202 may include a recording medium storing a predetermined program. The program stored in the recording medium may be installed via a drive apparatus or other apparatus, and the installed predetermined program may be configured to be executed by the control unit 201. Various types of recording media can be used. Examples include a recording medium that optically, electrically, or magnetically records information, such as a compact disc (CD)-ROM, flexible disk, or magneto-optical disk. Further, it is also possible to use a recording medium such as a semiconductor memory that electrically records information, such as a ROM or flash memory.

It should be noted that the recording medium does not include a carrier wave.

The UE management unit 203 manages UE information (an example of management information) within the area of the base station. For example, the UE management unit 203 generates and updates a management table storing UE information for each served UE (UE that communicates with the gNB A (103)). The management table stores an identifier (ID) of each served UE and measurement results (such as Uu link signal strength described below) reported by a served UE. Further, the management table stores information indicating whether each UE is operating as a relay UE, the remote UE, or neither. Further, the management table stores peer UE information. The peer UE refers to a peer remote UE in a case where the UE is operating as a relay UE, or a peer relay UE in a case where the UE is operating as a remote UE.

The path switching decision processing unit 204 performs a determination process related to path switching (Switching from indirect to direct path). For example, the path switching decision processing unit 204 determines whether to connect the UE (served UE) managed by the UE management unit 203 via an indirect or direct path based on the UE information managed by the UE management unit 203.

The RRC message generation processing unit 205 generates a message used in Radio Resource Control (RRC), which is a protocol used for a control signal between the gNB and the UE.

The RRC message analysis processing unit 206 analyzes an RRC message received from the served relay UE.

It should be noted that the functions corresponding to the UE management unit 203, the path switching decision processing unit 204, the RRC message generation processing unit 205, and/or the RRC message analysis processing unit 206 may be realized as software modules configured to be realized by the control unit 201.

The wireless communication unit 207 transmits and receives information via wireless communication with the served UE. For example, the wireless communication unit 207 performs a process of transmitting an RRC message generated by the RRC message generation processing unit 205 and a process of receiving an RRC message from the served UE and other necessary wireless signals.

Fig. 3A is a block diagram illustrating an example of a functional configuration of the UE B (102) (relay UE) according to the present embodiment.

In the example illustrated in Fig. 3A, the UE B (102) includes a control unit 301, a storage unit 302, a signal strength measurement unit 303, a Sidelink Relay processing unit 304, an RRC message generation processing unit 305, an RRC message analysis processing unit 306, and a wireless communication unit 307.

The control unit 301 controls the operation of the relay UE (self-apparatus). The control unit 301 consists of, for example, one or more processors, such as a CPU or MPU, and controls the entire communication apparatus by executing a control program loaded into a RAM which is the storage unit 302. It should be noted that each process performed by the control unit 301 in a flowchart described below may also be realized using a hardware circuit, such as an ASIC or FPGA. Further, a hardware circuit and a processor, such as a CPU or MPU, may cooperate to realize a process illustrated in a flowchart described below.

The storage unit 302 stores information used by the control unit 301 to perform control and information related to communication. The storage unit 302 may have a hardware configuration similar to that of the storage unit 202 described above.

The signal strength measurement unit 303 measures "the signal strength of the remote UE (PC5 link)" and "the signal strength of the gNB (Uu link)" as measured by the relay UE.

The Sidelink Relay processing unit 304 establishes a Sidelink connection with the remote UE to relay communication between the remote UE and the gNB via the New Radio (NR) Sidelinkrelay function of the relay UE. In other words, the Sidelink Relay processing unit 304 enables an indirect path by establishing a Sidelink connection with the remote UE. It should be noted that while mainly the NR Sidelinkrelay function will be described, this can be similarly applied to similar relay functions in 5G and subsequent generations, such as 5G Advanced and 6G.

The RRC message generation processing unit 305, like the RRC message generation processing unit 205, generates an RRC message.

The RRC message analysis processing unit 306 analyzes RRC messages received from the remote UE and the gNB.

The wireless communication unit 307 transmits and receives information to and from the remote UE and the base station (such as the gNB A (103)) via wireless communication. For example, the wireless communication unit 307 performs a process of transmitting an RRC message generated by the RRC message generation processing unit 305, a process of receiving RRC messages from the remote UE and the base station, and other necessary reception processing for wireless communication.

In the example illustrated in Fig. 3B, the remote UE includes a control unit 401, a storage unit 402, a signal strength measurement unit 403, a Sidelink Relay processing unit 404, a message generation processing unit 405, a message analysis processing unit 406, and a wireless communication unit 407.

The control unit 401 controls the operation of the remote UE. The control unit 401 consists of, for example, one or more processors, such as a CPU or MPU, and controls the entire communication apparatus by executing a control program loaded into a RAM which is the storage unit 402. It should be noted that each process performed by the control unit 401 in a flowchart described below may also be realized using a hardware circuit, such as an ASIC or FPGA.

The storage unit 402 stores information used by the control unit 401 to perform control and information related to communication. The signal strength measurement unit 403 measures "the signal strength of the relay UE (relay link)", "the signal strength of the base station (Uu link)", and "the signal strength of a candidate relay UE" as measured by the remote UE. The Sidelink Relay processing unit 404 establishes a Sidelink connection with the relay UE to enable connection to the gNB A (103) via the relay function of the relay UE (i.e., via an indirect path). The message generation processing unit 405 generates various messages.

The various messages include a discovery signal transmitted to a nearby relay UE, an RRC message transmitted to the gNB A (103), and other messages. The message analysis processing unit 406 analyzes a message, such as a discovery signal transmitted from the nearby relay UE, a response signal, and an RRC message transmitted from the gNB A (103). The wireless communication unit 407 transmits and receives information to and from the nearby relay UE and the gNB A (103) via wireless communication. The wireless communication unit 407 performs a process of transmitting a message generated by the RRC message generation processing unit 205 and a process of receiving messages from the nearby relay UE and the gNB A (103).

Next, a processing example will be described by dividing it into several embodiments.

### <First Embodiment>

According to the present embodiment, in a case where the gNB A (103) decides to hand over the UE B (102), which is a relay UE, to the gNB B (104), the gNB A (103) performs predetermined control prior to the handover. In this case, the predetermined control relates to path switching and, specifically, includes switching the path of the UE A, which is a remote UE, from the indirect path to the direct path.

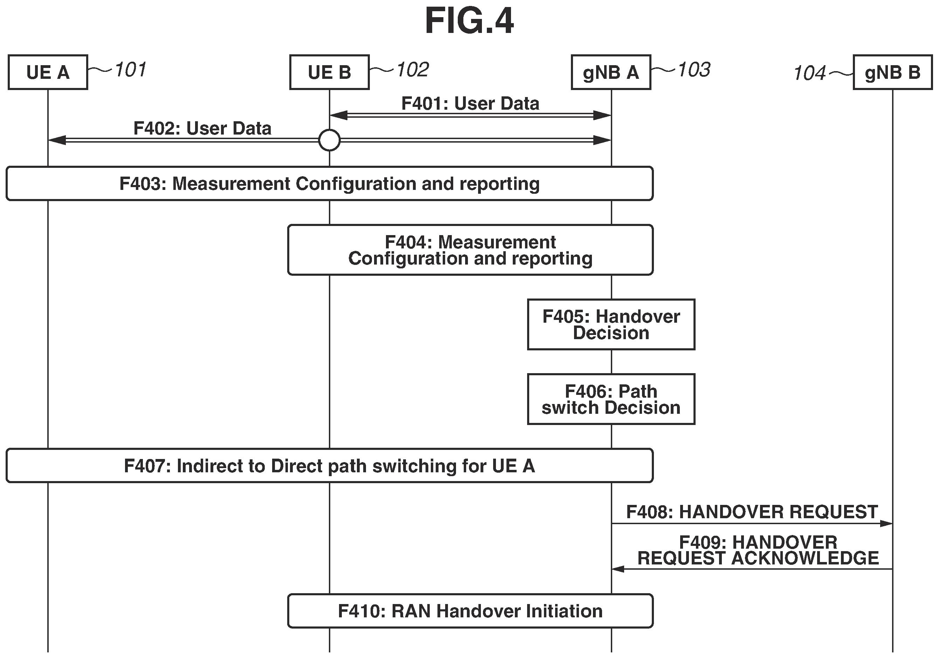

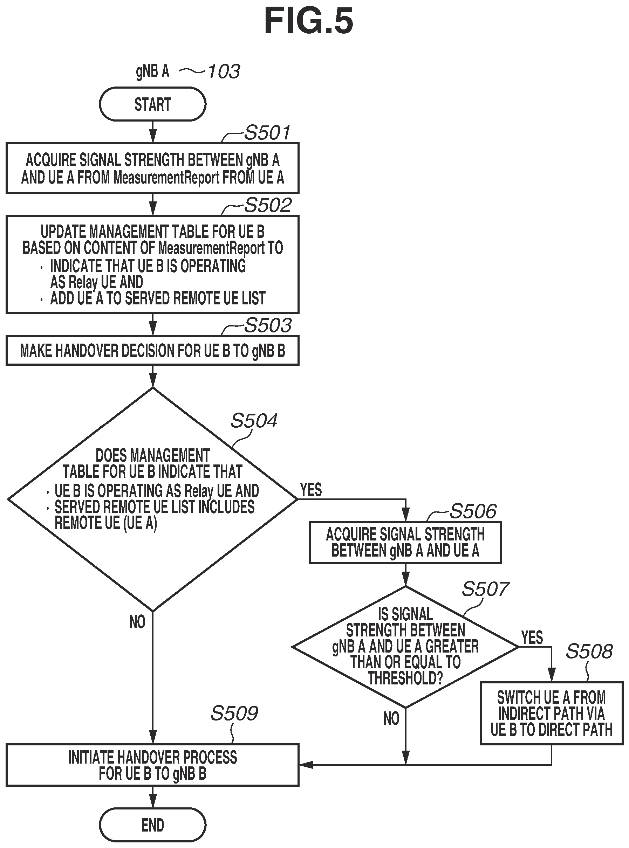

Operations according to the present embodiment will be described with reference to a sequence illustrated in Fig. 4 and a flowchart illustrated in Fig. 5.

First, the UE B (102) transmits and receives user data to and from the gNB A (103) via the direct path (F401). Further, the UE A (101) serving as a remote UE transmits and receives user data to and from the gNB A (103) via the NR Sidelink relay function (i.e., via the indirect path) of the UE B (102) serving as a relay UE (F402).

The UE A (101) reports the signal strength between the UE A (101) and the gNB A (103) to the gNB A (103) using Measurement Configuration and Reporting during user data transmission and reception (F403). The UE A (101) performs this reporting by transmitting a MeasurementReport. The gNB A (103) acquires the signal strength from the message and sets the signal strength in the management table for the UE A (101) stored in the UE management unit 203 (S501).

At this point, the gNB A (103) can determine that the UE A (101) is a remote UE under the relay UE B (102) based on an sl-MeasResultServingRelay included in the MeasurementReport. Based on this result, the gNB A (103) sets the management table for the UE B (102) stored in the UE management unit 203 to indicate that the UE B (102) is operating as a relay UE. Further, the UE A (101) is added to a served remote UE list in the management table for the UE B (102) (S502).

The UE B (102) performs reporting in using Measurement Configuration and Reporting. In other words, the UE B (102) reports a MeasurementReport including the signal strength between the UE B (102) and the gNB A and the signal strength between the UE B (102) and the gNB B (104), which is a neighboring cell, to the gNB A (103) (F404). As described above with reference to Fig. 1, a situation where the gNB A (103) is attempting to hand over the UE B (102) to the gNB B (104), which serves as a target is assumed here. In other words, the gNB A (103) makes a handover decision for the UE B based on the results of the MeasurementReport (F405, S503).

At this time, the gNB A (103) refers to the management table for the UE B (102) stored in the UE management unit 203 and identifies that the UE B (102) is operating as a relay UE and that there is a served remote UE A (S504). Based on these results, the gNB A (103) refers to the management table for the UE A (101) stored in the UE management unit 203 and acquires the signal strength acquired in S501 (S506).

The gNB A (103) determines whether the acquired signal strength is greater than or equal to a threshold for determining whether the signal strength is sufficient to connect the UE A (101) via the direct path (F405, S507). Then, in a case where the signal strength is sufficient for connection via the direct path, the gNB A (103) determines to switch the path of the UE A (101) from the indirect path via the UE B (102) to the direct path (F406). As a result, the gNB A (103) switches the UE A (101) from the indirect path via the UE B (102) to the direct path (F407, S508).

After the path of the UE A (101) is switched, the gNB A (103) initiates a handover process for the UE B (102) to the gNB B (104) (F408 to F410, S509).

It should be noted that in a case where the signal strength is not sufficient for connection via the direct path ("NO" in S507), the processing proceeds to S509 without performing control on the UE A (101).

By following the above-described flow, the gNB A (103) can achieve the following switching in a situation where the UE B (102) transitions from the communication area (105) of the gNB A (103) to the communication area (106) of the gNB B (104). Specifically, the gNB A (103) can switch the UE A (101) from the indirect path to the direct path prior to a network disconnection of the relay UE A (101) due to the handover of the UE B (102). This makes it possible to prevent a temporary service disconnection due to relay UE or cell reselection for the UE A (101).

It should be noted that while the UE A (101) is the only remote UE under the relay UE B (102) in the example illustrated in Fig. 5, this can be similarly applied to a case where there is another UE (a remote UE under the relay UE B (102)) in addition to the UE A (101). Specifically, in this case, the similar process may be performed on each remote UE under the relay UE B (102).

### <Second Embodiment>

The first embodiment describes an example in which the gNB identifies the remote UE under the relay UE based on the MeasurementReport from the remote UE. The second embodiment will describe an example in which the gNB can identify the remote UE under the relay UE based on a message from the relay UE.

It should be noted that according to the second embodiment, in a case where the gNB A (103) decides to hand over the UE B (102), which is a relay UE, to the gNB B (104), the gNB A (103) performs predetermined control prior to the handover. In this case, the predetermined control includes switching the path of the UE A, which is a remote UE, from the indirect path to the direct path.

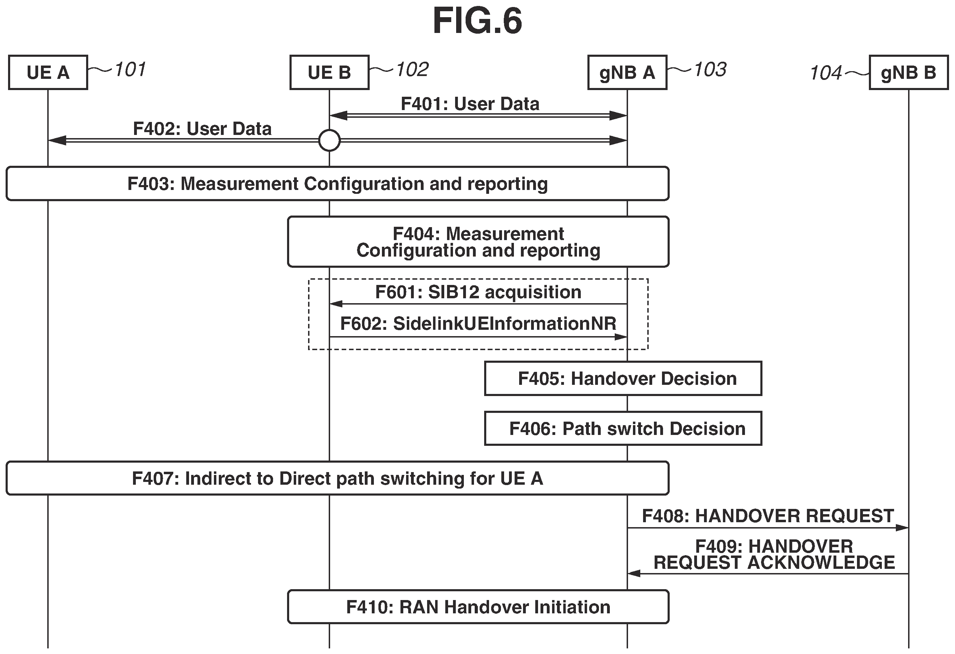

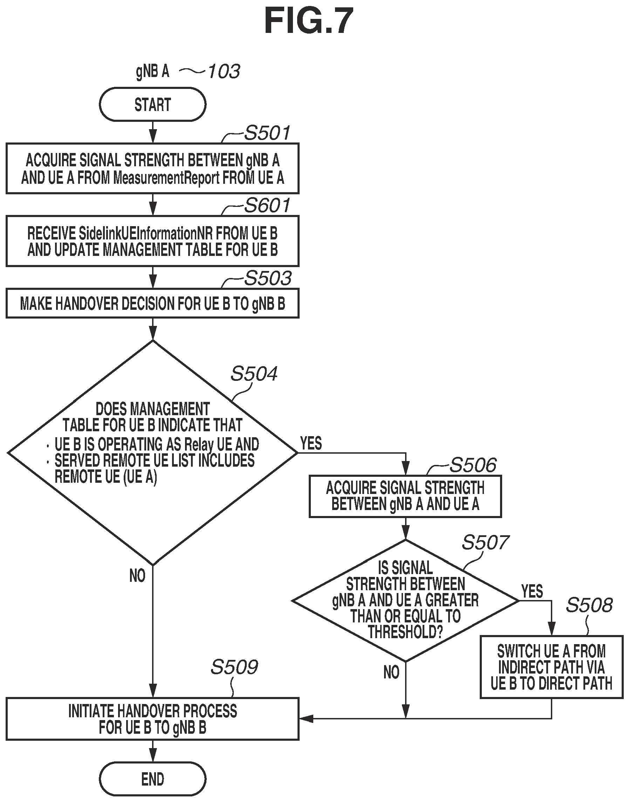

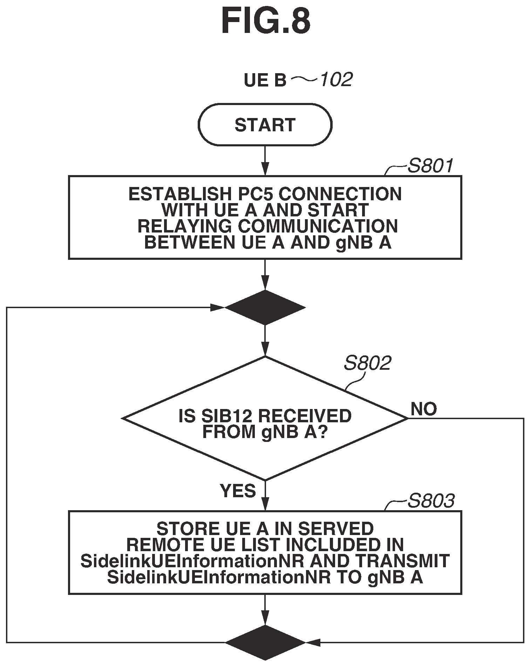

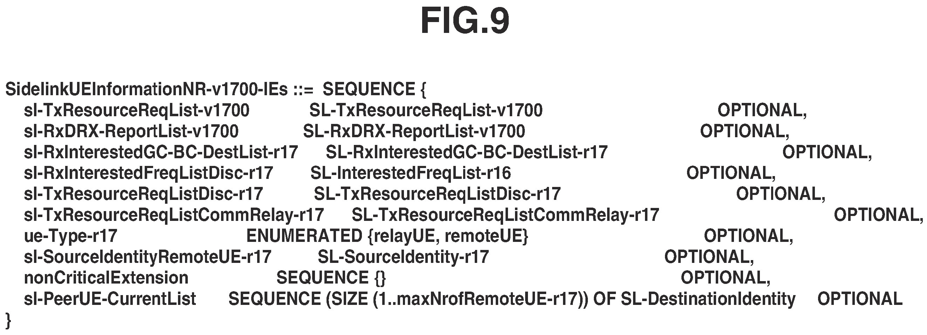

Operations according to the second embodiment will be described with reference to a sequence illustrated in Fig. 6, a flowchart for the gNB illustrated in Fig. 7, a flowchart for the relay UE illustrated in Fig. 8, and a message format illustrated in Fig. 9.

First, the second embodiment is similar to the first embodiment in the following respects. The UE A (101) transmits and receives user data to and from the gNB A (103) via the indirect path through the UE B (102), and the UE B (102) transmits and receives user data to and from the gNB A (103) via the direct path (F401, F402, S801). Further, the UE A (101) reports the signal strength between the gNB A (103) and the UE A (101) to the gNB A (103) using Measurement Configuration and Reporting, and the UE B (102) reports the signal strength between the gNB A (103) and the UE B (102) to the gNB A (103) using Measurement Configuration and Reporting (F403, F404).

At this point, System Information Block Type 12 (SIB12) reception from the gNB A (103) ("YES" in S802) triggers the UE B (102) to transmit a SidelinkUEInformationNR to the gNB A (103) (F601, F602, S803). The SidelinkUEInformationNR is an RRC message and will be described below with reference to Fig. 9. The SIB12 is system information for notifying the UE of a Sidelink-related function supported by the gNB and is periodically transmitted from the gNB to the UE. Alternatively, the UE may transmit a DedicatedSIBRequest to the gNB to request the gNB to transmit the SIB12 to the UE. According to the second embodiment, the gNB A (103) periodically transmits an SIB12 to the UE B (102).

Fig. 9 illustrates a SidelinkUEInformationNR message format used in the second embodiment. According to the second embodiment, an information element referred to as sl-PeerUE-CurrentList is added to the SidelinkUEInformationNR. The sl-PeerUE-CurrentList is a list capable of storing Source Layer-2 IDs of a plurality of peer UEs. The sl-PeerUE-CurrentList corresponds to a list of destination IDs for the peer UEs. It should be noted that the list name "sl-PeerUE-CurrentList" is an example and may be optional.

It should be noted that in Fig. 9, ue-Type indicates that the UE is operating as a UE-to-Network (U2N) relay UE or U2N remote UE.

The UE B (102) adds the Source Layer-2 ID of the UE A (101) to the sl-PeerUE-CurrentList. Then, the UE B (102) generates a SidelinkUEInformationNR and transmits the generated SidelinkUEInformationNR to the gNB A (103) (S803).

The gNB A (103) having received the SidelinkUEInformationNR from the UE B (102) updates the management table for the UE B (102) stored in the UE management unit 203. In other words, information indicating that the UE B (102) is operating as a relay UE is added to the management table for the UE B (102) based on the content of the sl-PeerUE-CurrenntList (S601). Further, the UE A (101) is added to the served remote UE list stored in the management table for the UE B (102) (S601). It should be noted that it can be determined that the UE B (102) is operating as a relay UE based on the ue-Type in the SidelinkUEInformationNR.

The rest of the second embodiment may be similar to the rest of the first embodiment. First, the following information can be identified based on the management table for the UE B (102) updated when the gNB A (103) made a handover decision for the UE B (102) (S504). Specifically, the gNB A (103) can identify that the UE A (101) operating as a remote UE is communicating with the gNB A (103) via the relay function of the relay UE B (102) (S504).

Further, as in the first embodiment, the gNB A (103) determines whether the signal strength between the UE A (101) and the gNB A (103) is greater than or equal to the threshold for determining whether the signal strength is sufficient for connection via the direct path (S507). Then, in a case where the signal strength is sufficient for connection via the direct path, the gNB A (103) switches the UE A (101) from the indirect path via the UE B (102) to the direct path (F406, F407, S508). Further, after the switching, the gNB A (103) initiates a handover for the UE B (102) (F408 to F410, S509).

By following the above-described flow, the gNB A (103) can switch the UE A (101) from the indirect path to the direct path prior to a network disconnection of the relay UE A (101) due to the handover of the UE B (102). This makes it possible to prevent a temporary service disconnection due to relay UE or cell reselection for the UE A (101).

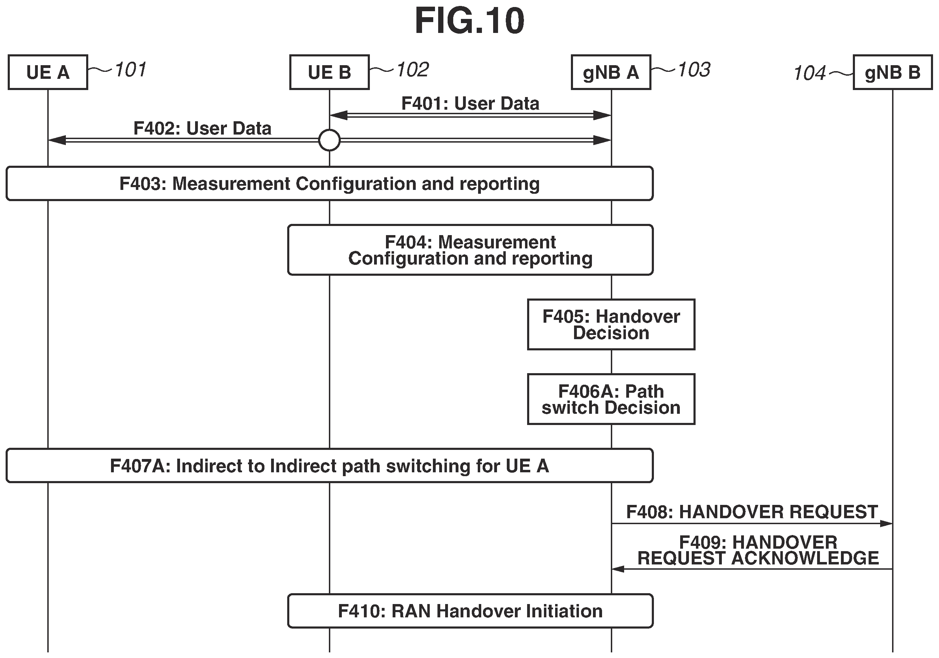

Next, modified example will be described with reference to Figs. 10 to 12.

While the predetermined control switches the path of the remote UE under the handover target relay UE from the indirect path to the direct path according to the first embodiment (and the second embodiment) described above, this is not intended to be limiting. For example, as in the modified example described below, the predetermined control may include switching the path of the remote UE under the handover target relay UE from the indirect path to another indirect path in place of or in addition to the path switching from the indirect path to the direct path.

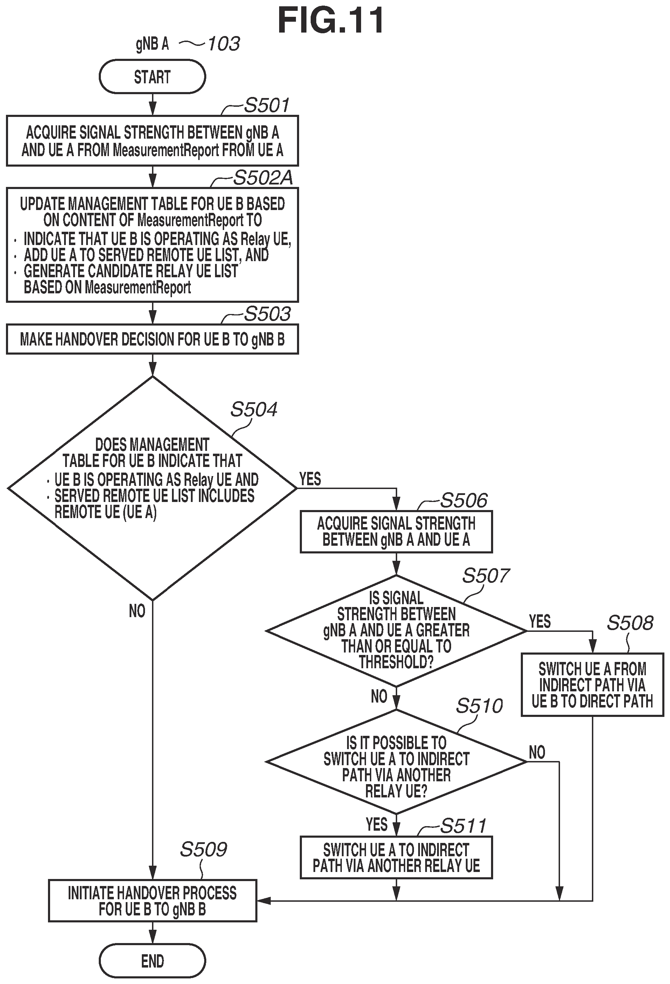

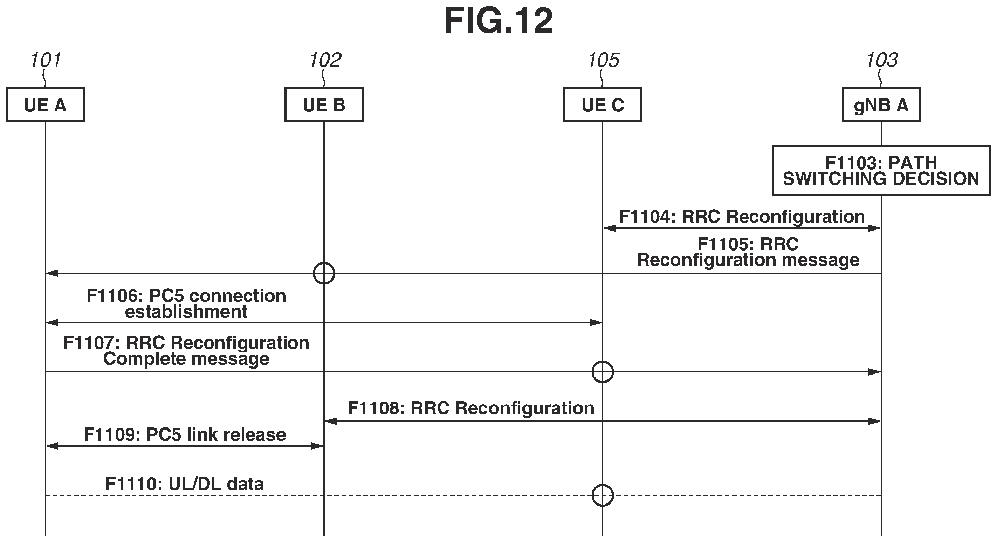

Fig. 10 is a sequence diagram illustrating a case where the gNB makes a handover decision for the relay UE and makes a path switch decision for the remote UE according to the present modified example. Fig. 11 is a flowchart for the gNB A (103) according to the present modified example. Fig. 12 is a sequence diagram related to path switching to the indirect path.

The sequence in Fig. 10 illustrating a case where a path switching decision is made according to the present modified example differs from the sequence according to the first embodiment described above with reference to Fig. 4 in that the processes in F406 and F407 are replaced with those in F406A and F407A, respectively. Further, the flowchart according to the present modified example illustrated in Fig. 11 differs from the flowchart according to the first embodiment described above with reference to Fig. 5 in that S502 is replaced with S502A and S510 and S511 are added.

According to the present modified example, the gNB A (103) generates a candidate relay UE list, in addition to the served remote UE list, based on the MeasurementReport described above (S502A). The candidate relay UE list is a list of UEs (relay UE candidates) that can operate as relay UEs under the gNB A (103).

Further, according to the present modified example, the gNB A (103) operates as follows as a result of determining whether the signal strength is greater than or equal to the threshold for determining whether the signal strength is sufficient to connect the UE A (101) via the direct path (F405, S507). In a case where the signal strength is not sufficient for connection via the direct path ("NO" in S507), the gNB A (103) determines whether it is possible to switch the UE A (101) to an indirect path via another relay UE (S510). For example, in a case where the candidate relay UE list includes a relay UE candidate with signal strength to the UE A (101) that is greater than or equal to the threshold, it may be determined whether it is possible to switch the path using the relay UE candidate as another relay UE. It should be noted that the signal strength between the UE A (101) and each candidate relay UE in the candidate relay UE list may be included in the Measurement report from the UE A (101) in S501. In this case, the UE A (101) may perform a discovery process to search for a UE relay that can serve as a candidate. Specifically, in a case where a discovery signal or a response signal to a discovery signal from a nearby UE is received, the UE A (101) analyzes the received signal. Then, the UE A (101) generates a Measurement report based on the analysis results.

In a case where the gNB A (103) determines that it is possible to switch the path from the indirect path via the UE B (102) to an indirect path via another relay UE as described above, the gNB A (103) decides to perform path switching as described above (F406A). As a result, the gNB A (103) switches the UE A (101) from the indirect path via the UE B (102) to an indirect path via another relay UE (F407A, S511).

Switching from an indirect path to another indirect path as described above may be performed based on, for example, the sequence illustrated in Fig. 12. Here, a UE C (105) is assumed as another relay UE for switching to an indirect path via the other relay UE.

In the example illustrated in Fig. 12, the gNB A (103) performs RRC reconfiguration on the UE C (105) (F1104). Further, the gNB A (103) notifies the UE A (101) of necessary information for establishing Sidelinkrelay communication with the UE C (105) (F1105). The necessary information includes sl-L2RemoteUE-Config. The sl-L2RemoteUE-Config includes information that is necessary for operating as a remote UE and used in the Sidelink Relay Adaptation Protocol (SRAP).

Furthermore, the gNB A (103) adds an sl-PathSwitchConfig to a ReconfigurationWithSync in an RRC reconfiguration message. At this time, the sl-PathSwitchConfig that includes the ID of the UE C (105) is used. This enables the gNB A (103) to notify the UE A (101) that the path is switched from the indirect path via the UE B (102) to the indirect path via the UE C (105).

The UE A (101) checks whether the RRC reconfiguration message is received from the gNB A (103). At this time, the control unit 301 checks the ID of the UE C (105) based on the sl-PathSwitchConfig, thereby determining that the path is switched from the indirect path via the UE B (102) to the indirect path via the UE C (105) (F1105).

Next, the UE A (101) stops data transmission to and reception from the UE B (102) and establishes PC5 communication (PC5 Connection) with the UE C (105) (F1106). From this point, the UE A (101) and the UE C (105) can use Sidelinkrelay communication based on the SRAP information acquired from the RRC reconfiguration message. In other words, the UE A (101) can transmit and receive data to and from the gNB A (103) via the UE C (105).

After establishing PC5 communication with the UE C (105), the UE A (101) generates an RRC reconfiguration complete message. The UE A (101) transmits the RRC reconfiguration complete message to the gNB A (103) via the UE C (105) (F1107). In other words, the UE A (101) transmits the RRC reconfiguration complete message to the gNB A (103) via not the UE B (102) but the UE C (105).

The gNB A (103) receives the RRC reconfiguration complete message from the UE A (101) via the UE C (105). In a case where the message is received, the gNB A (103) can determine that indirect path switching for the UE A (101) is complete (F1107).

After the current path switching for the UE A (101) is complete, the gNB A (103) performs RRC reconfiguration on the UE B (102) and releases the Sidelinkrelay function for the UE A (101) (F1108).

On the other hand, the UE A (101) releases the PC5 link to the UE B (102) (F1109).

Then, the UE A (101) continues transmitting and receiving user data to and from the gNB A (103) via the Sidelinkrelay function of the UE C (105) (F1110). In other words, the UE A (101) continues transmitting and receiving user data (such as streaming data) to and from the gNB A (103). It should be noted that in a case where there is an undelivered packet being relayed by the UE B (102), the undelivered packet is transferred to the UE C (105) and transmitted to the destination by the UE C (105), when necessary. The undelivered packet may be configured to be transferred directly from the UE B (102) to the UE C (105). Alternatively, the undelivered packet may be configured to be transferred from the UE B (102) to the gNB A (103) and from the gNB A (103) to the UE C (105). In a case where the latter method for transferring the undelivered packet via the gNB A (103) is employed, the transfer to the UE C (105) may be omitted in a case where user data is transmitted to not the UE A (101) but the core network via uplink communication.

While each embodiment has been described in detail above, the present disclosure is not limited to the specific embodiments, and various modifications and changes are possible within the scope of the claims. Further, all or some of the components of the embodiments described above may be combined.

It should be noted that the following additional information is further disclosed in connection with the embodiments described above.

### [Additional Note 1]

A base station comprising a control unit configured to perform a handover of a relay User Equipment (relay UE) including a Sidelink relay function to another base station in a situation where a Sidelink connection is established with a remote User Equipment (remote UE) via the relay UE,
wherein in a case where the control unit determines to perform the handover of the relay UE to the other base station in a state where the remote UE is relayed via the relay UE, the control unit performs predetermined control related to communication on the remote UE prior to the handover of the relay UE.

### [Additional Note 2]

The base station according to Additional Note 1, further comprising a storage unit configured to store management information related to a relay state of a served User Equipment (served UE) including the remote UE,
wherein the control unit performs the predetermined control based on the management information.

### [Additional Note 3]

The base station according to Additional Note 2, wherein the management information includes information representing each relay UE and a remote UE connected to the relay UE.

### [Additional Note 4]

The base station according to any one of Additional Notes 1 to 3, wherein the predetermined control includes path switching from an indirect path where the remote UE connects via the relay UE to a direct path where the remote UE connects directly.

### [Additional Note 5]

The base station according to Additional Note 4, wherein the control unit performs the path switching in a case where signal strength between the base station and the remote UE is greater than or equal to a threshold.

### [Additional Note 6]

The base station according to Additional Note 2, wherein the control unit updates the management information based on a Measurement report or SidelinkUElnformationNR message received from the remote UE.

### [Additional Note 7]

The base station according to Additional Note 6, wherein the control unit updates the management information based on a result of determining whether the remote UE is connected via the relay UE based on an sl-MeasResultServingRelay in the Measurement report.

### [Additional Note 8]

The base station according to Additional Note 6, wherein the SidelinkUElnformationNR message includes information about the remote UE connected to the relay UE.

### [Additional Note 9]

A communication apparatus including a New Radio (NR) Sidelinkrelay function, the communication apparatus comprising a transmission unit configured to transmit, to a base station, a SidelinkUElnformationNR message defined in the Radio Resource Control (RRC) protocol in a situation where NR Sidelink communication between the base station and a remote User Equipment (remote UE) is relayed,
wherein the transmission unit includes information about the remote UE in the SidelinkUElnformationNR message.

### [Additional Note 10]

The communication apparatus according to Additional Note 9, wherein the information about the remote UE includes a Source layer-2 identifier (Source layer-2 ID) of the remote UE.

### [Additional Note 11]

The communication apparatus according to Additional Note 10, further comprising a control unit configured to generate or update a list storing the Source Layer-2 ID of each remote UE during PC5 link establishment with the remote UE,
wherein the transmission unit includes the list in the SidelinkUElnformationNR message.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-119999, filed July 24, 2023, which is hereby incorporated by reference herein.

## Claims

1. A base station comprising a control unit configured to perform a handover of a relay User Equipment (relay UE) including a Sidelink relay function to another base station in a situation where a Sidelink connection is established with a remote User Equipment (remote UE) via the relay UE,
wherein in a case where the control unit determines to perform the handover of the relay UE to the other base station in a state where the remote UE is relayed via the relay UE, the control unit performs predetermined control related to communication on the remote UE prior to the handover of the relay UE.

2. The base station according to Claim 1, further comprising a storage unit configured to store management information related to a relay state of a served User Equipment (served UE) including the remote UE,
wherein the control unit performs the predetermined control based on the management information.

3. The base station according to Claim 2, wherein the management information includes information representing each relay UE and a remote UE connected to the relay UE.

4. The base station according to Claim 1, wherein the predetermined control includes path switching from an indirect path where the remote UE connects via the relay UE to a direct path where the remote UE connects directly.

5. The base station according to Claim 4, wherein the control unit performs the path switching in a case where signal strength between the base station and the remote UE is greater than or equal to a threshold.

6. The base station according to Claim 2, wherein the control unit updates the management information based on a Measurement report or SidelinkUElnformationNR message received from the remote UE.

7. The base station according to Claim 6, wherein the control unit updates the management information based on a result of determining whether the remote UE is connected via the relay UE based on an sl-MeasResultServingRelay in the Measurement report.

8. The base station according to Claim 6, wherein the SidelinkUElnformationNR message includes information about the remote UE connected to the relay UE.

9. A communication apparatus including a New Radio (NR) Sidelinkrelay function, the communication apparatus comprising a transmission unit configured to transmit, to a base station, a SidelinkUElnformationNR message defined in the Radio Resource Control (RRC) protocol in a situation where NR Sidelink communication between the base station and a remote User Equipment (remote UE) is relayed,
wherein the transmission unit includes information about the remote UE in the SidelinkUElnformationNR message.

10. The communication apparatus according to Claim 9, wherein the information about the remote UE includes a Source layer-2 identifier (Source layer-2 ID) of the remote UE.

11. The communication apparatus according to Claim 10, further comprising a control unit configured to generate or update a list storing the Source Layer-2 ID of each remote UE during PC5 link establishment with the remote UE,
wherein the transmission unit includes the list in the SidelinkUElnformationNR message.

12. A method for controlling communication, the method comprising performing control configured to perform a handover of a relay User Equipment (relay UE) including a Sidelink relay function to another base station in a situation where a Sidelink connection is established with a remote User Equipment (remote UE) via the relay UE,
wherein in a case where the control determines to perform the handover of the relay UE to the other base station in a state where the remote UE is relayed via the relay UE, the control performs predetermined control related to communication on the remote UE prior to the handover of the relay UE.

13. A program causing a computer to perform control configured to perform a handover of a relay User Equipment (relay UE) including a Sidelink relay function to another base station in a situation where a Sidelink connection is established with a remote User Equipment (remote UE) via the relay UE,
wherein in a case where the control determines to perform the handover of the relay UE to the other base station in a state where the remote UE is relayed via the relay UE, the control performs predetermined control related to communication on the remote UE prior to the handover of the relay UE.

14. A method for controlling communication of a communication apparatus including a New Radio (NR) Sidelinkrelay function, the method comprising transmitting, to a base station, a SidelinkUElnformationNR message defined in the Radio Resource Control (RRC) protocol and including information about the remote UE in a situation where NR Sidelink communication between the base station and a remote User Equipment (remote UE) is relayed.

15. A program for controlling communication of a communication apparatus including a New Radio (NR) Sidelinkrelay function, the program causing a computer to transmit, to a base station, a SidelinkUElnformationNR message defined in the Radio Resource Control (RRC) protocol and including information about the remote UE in a situation where NR Sidelink communication between the base station and a remote User Equipment (remote UE) is relayed.
